## Europäisches Patentamt

## European Patent Office

## Office européen des brevets

(11) Veröffentlichungsnummer: **0 225 864**
**A1**

# EUROPÄISCHE PATENTANMELDUNG

(21) Anmeldenummer: 86890296.6

(22) Anmeldetag: 03.11.86

(51) Int. Cl.⁴: **B 01 D 53/04**

(30) Priorität: 08.11.85 AT 3255/85

(43) Veröffentlichungstag der Anmeldung:
16.06.87 Patentblatt 87/25

(84) Benannte Vertragsstaaten: **DE FR GB IT SE**

(71) Anmelder: **VOEST-ALPINE Aktiengesellschaft**
**Muldenstrasse 5**
**A-4020 Linz (AT)**

(72) Erfinder: **Cvitas, Vilim, Dipl.-Ing.**
**Wöberweg 8**
**A-4060 Leonding (AT)**

**Faltejsek, Karl, Dipl.-Ing.**
**Lüfteneggerstrasse 6**
**A-4020 Linz (AT)**

**Wawrina, Rainer**
**Leitergraben 39**
**A-4060 Leonding (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) Verfahren zum Trennen von Gasgemischen, sowie Vorrichtung zur Durchführung dieses Verfahrens.

(57) Für die Trennung von Gasgemischen, insbesondere die Zerlegung von Luft, unter Verwendung von Molekularsieben wird ein Gaskompressor (1) kraftschlüssig mit einer Entspannungsturbine (9) gekuppelt. Die Entspannungsturbine (9) wird mit dem das Molekularsieb (5) verlassenden und durch einen Wärmetauscher (8) erhitzten Druckmedium betrieben, wobei ein Teil der Antriebsenergie für den Kompressor (1) eingespart werden kann. Für die Desorption des Sauerstoffes aus dem sauerstoffzurückhaltenden Molekularsieb (5) wird dieses Molekularsieb (5) erwärmt, wofür die Abgase einer im Wärmetauscher (8) vorgenommenen Verbrennung herangezogen werden. Zur Erwärmung des sauerstoffzurückhaltenden Molekularsiebes (5) wird zunächst über ein Gebläse (30) ein Gasstrom über den Wärmetauscher (27) im Kreislauf geführt, worauf nach Erzielen der erforderlichen Desorptionstemperatur für das sauerstoffzurückhaltenden Molekularsieb (5) reiner Sauerstoff abgezogen und beispielsweise nach einer Kompression durch einen Sauerstoffverdichter (41) als Drucksauerstoff gespeichert oder ausgetragen werden kann.

EP 0 225 864 A1

## Beschreibung

Verfahren zum Trennen von Gasgemischen, sowie Vorrichtung zur Durchführung dieses Verfahrens

Die Erfindung bezieht sich auf ein Verfahren zum Trennen von Gasgemischen, insbesondere zur Zerlegung von Luft, bei welchem das Gasgemisch komprimiert und über ein O₂-zurückhaltendes Molekularsieb geleitet wird, und bei welchem der das Molekularsieb verlassende Gasanteil, insbesondere der Stickstoff, über eine mit dem Gaskompressor kraftschlüssig kuppelbare Entspannungsturbine geleitet wird.

Die Gewinnung von technischen Gasen, wie Sauerstoff und Stickstoff oder Argon aus Luft wird zumeist mit Tieftemperaturrektifikationsanlagen vorgenommen. Derartige Anlagen sind relativ aufwendig und teuer und müssen in regelmäßigen Abständen zum Tauen abgestellt werden. In einem Zeitraum von etwa 2 Wochen müssen in den Tieftemperaturteil eingeschleppte Kohlenwasserstoffe, Kohlensäure bzw. Wasserspuren, welche auf Grund der Eisbildung die Wärmetauscherpassagen verlegen, durch Warmfahren wieder abgedampft und ausgetragen werden.

Alternativ zu Tieftemperaturrektifikationsverfahren sind sogenannte Pressure Swing-Verfahren bekannt. Derartige Verfahren wurden aber nur bei sehr kleinen Anlagen eingesetzt, da sie einen relativ hohen Energieaufwand benötigen. Die Vorteile eines einfacheren Aufbaues und des Wegfalls von längeren Regenerierperioden haben mit Rücksicht auf den wesentlich höheren Energieverbrauch nicht ausgereicht, die großtechnische Durchsetzung dieses Verfahrens sicherzustellen. Mit derartigen Pressure Swing-Verfahren ist allerdings weder Argon herstellbar noch können Gase verflüssigt werden. Derartige Pressure Swing-Verfahren arbeiten mit Molsieben und es sind Molsiebe bekannt, welche selektiv einzelne Gase eines Gemisches zurückhalten und unter bestimmten Bedingungen wiederum freisetzen. Ein Verfahren zur Trennung von Gasgemischen mittels der Druckwechseltechnik ist beispielsweise der DE-OS 31 22 701 zu entnehmen. Bei diesem bekannten Verfahren werden mehrstufige Adsorptionsreaktoren eingesetzt, wobei beispielsweise reiner Wasserstoff aus Kokereigasen gebildet wurde.

Aus der DE-OS 33 19 664 ist ein mit Adsorptionsreaktoren betriebenes Verfahren zur Reinigung von Gasgemischen bekanntgeworden. Schließlich ist aus der DE-OS 33 07 974 bereits ein Verfahren zur Gewinnung von Stickstoff aus Luft bekanntgeworden, bei welchem mit sauerstoffzurückhaltenden Kohlenstoffmolekularsieben gearbeitet wird.

Aus der DE-A-3 150 624 ist bereits ein Verfahren der eingangs genannten Art zu entnehmen, bei welchem Stickstoff unter Druck über eine Expansionsturbine geleitet wird, welche mit dem Antrieb für den Verdichter verbunden ist. Eine bereits vorgeschlagene Vorwärmung des Stickstoffes unter Druck durch die komprimierte Luft ergibt eine Erwärmung auf maximal 140°C und die auf diese Weise rückgewinnbare Antriebsenergie für den Verdichter bleibt daher gering.

Die Erfindung geht nun von derartigen bekannten Verfahren aus, bei welchen immer nur ein Produktgas relativ rein erzielt wurde, und zielt darauf ab, den Energieaufwand soweit zu senken, daß das Verfahren wirtschaftlich interessant wird, und gleichzeitig die Möglichkeit zu schaffen, daß nicht nur eines, sondern wenigstens zwei Bestandteile des Gasgemisches relativ rein gewonnen werden können. Zur Lösung dieser Aufgabe geht die Erfindung von einem Verfahren aus, bei welchem mit einem sauerstoffzurückhaltenden Molekularsieb gearbeitet wird und es wird erfindungsgemäß vorgeschlagen, daß der das Molekularsieb verlassende Gasanteil vor dem Einleiten in die Entspannungsturbine auf Temperaturen über 200°C, vorzugsweise 500° bis 850°C, erhitzt wird, wobei wenigstens ein Wärmetauscher für die Erhitzung des der Entspannungsturbine zuzuführenden Gasanteiles mit heißen Brenngasen beheizt wird. Der Betrieb des sauerstoffzurückhaltenden Molekularsiebes erfolgt mit komprimiertem Gas und das das Molekularsieb verlassende Gas steht immer noch unter dem Kompressionsdruck. Durch die nachgeschaltete Expansion dieses Gases über eine Entspannungsturbine kann ein Teil der Kompressionsenergie rückgewonnen werden und Antriebsenergie für den größten Energieverbraucher einer derartigen Einrichtung, nämlich den Luftverdichter eingespart werden. Die volle Antriebsleistung ist auf diese Weise lediglich beim Hochfahren erforderlich und lediglich ein kleinerer Teil seiner Grenzleistung, nämlich die Differenzleistung zwischen Verdichter und Entspannungsturbine ist im laufenden Betrieb aufzuwenden.

Sauerstoffzurückhaltende Molekularsiebe können üblicherweise bei Temperaturen von -20 bis +40°C betrieben werden. Das den Luftkompressor verlassende Gas wird daher vor dem Einleiten in das sauerstoffzurückhaltende Molekularsieb einer Kühlung unterworfen. Entspannungsturbinen können nun mit wesentlich höheren Temperaturen betrieben werden und der Wirkungsgrad läßt sich durch Aufheizen des das sauerstoffzurückhaltende Molekularsieb verlassenden Gases wesentlich verbessern. Erfindungsgemäß wird daher so vorgegangen, daß der das Molekularsieb verlassende Gasanteil vor dem Einleiten in die Entspannungsturbine auf Temperaturen über 200°C, vorzugsweise 500° bis 850°C, erhitzt wird. Die Erhitzung des der Entspannungsturbine zuzuführenden Gasanteiles wird durch Verbrennung von Brennstoffen vorgenommen werden. Dies bedeutet zwar ein weiteres Energieeinbringen, jedoch wird auf diese Weise die Voraussetzung geschaffen, um gleichzeitig nicht nur Stickstoff sondern auch Sauerstoff in guter Reinheit zu erhalten. Zur Desorption des Sauerstoffs aus dem sauerstoffzurückhaltenden Molekularsieb ist es nämlich vorteilhaft, so vorzugehen, daß das Molekularsieb auf Temperaturen von wenigstens 150°C, vorzugsweise wenigstens 200°C, erwärmt wird und nach Entspannen gegen atmosphärischen Druck drucklos oder unter unteratmosphärischem Druck abgesaugt wird. Die Erwärmung des das Molekularsieb verlassenden Gasanteiles vor dem Einleiten in die Entspannungsturbine mittels Brennern kann hiebei mit Vorteil so durchgeführt werden, daß die heißen Verbrennungsabgase über wenigstens einen weiteren Wärmetauscher für die Erwärmung eines das Molekularsieb zur Desorption des Sauerstoffes erwärmenden Mediums geleitet werden.

Im Rahmen dieses Verfahrens ist es vorteilhaft, das Molekularsieb, welches Sauerstoff zurückhalten soll und in der Folge diesen Sauerstoff nach einer Erwärmung wieder freigeben soll, nicht mit zu vielen Fremdbestandteilen zu belasten. Zu diesem Zweck ist es vorteilhaft das Verfahren so durchzuführen, daß vor dem $O_2$-zurückhaltenden Molekularsieb ein weiteres, insbesondere $H_2O$- und $CO_2$-zurückhaltendes Molekularsieb vom komprimierten Gas durchströmt wird, welches durch eine Teilmenge des die Entspannungsturbine verlassenden Gasanteiles, insbesondere des $N_2$, regenerierbar ist. Wenn die Gase vor dem Eintritt in die Entspannungsturbine auf Temperaturen von 500° bis 850°C erhitzt werden, so ist damit zu rechnen, daß der Temperaturabfall in der Entspannungsturbine zwischen 300 und 400°C beträgt. Es steht somit ein relativ heißes Produktgas zur Verfügung, welches in besonders vorteilhafter Weise unmittelbar für die Reinigung des weiteren Molekularsiebes herangezogen werden kann.

Die erfindungsgemäße Vorrichtung zur Durchführung dieses Verfahrens ist im wesentlichen dadurch gekennzeichnet, daß mit einem Gaskompressor eine Entspannungsturbine gekoppelt ist. In vorteilhafter Weise ist die Ausgestaltung hiebei so getroffen, daß die das $O_2$-zurückhaltende Molekularsieb mit der Entspannungsturbine verbindende Leitung über wenigstens einen mit Brennern beaufschlagten Wärmetauscher geführt ist, wobei vorzugsweise ein weiterer Wärmetauscher vorgeschaltet ist, über welchen die die Entspannungsturbine verlassenden Gase geleitet sind. Auf diese Weise wird der Wirkungsgrad der Entspannungsturbine wesentlich verbessert und gleichzeitig die Voraussetzung geschaffen, für die Desorption des Sauerstoffes aus dem sauerstoffzurückhaltenden Molekularsieb ein warmes Medium zur Aufwärmung des Molekularsiebes zur Verfügung zu stellen. Die Ausbildung ist hiefür so getroffen, daß zur Desorption des Sauerstoffes aus dem $O_2$-zurückhaltenden Molekularsieb das Gas wenigstens teilweise im Kreislauf über einen Wärmetauscher geführt ist, welcher mit den Verbrennungsabgasen aus dem mit Brennern beaufschlagten Wärmetauscher gespeist ist, und daß mit dem Molekularsieb eine abschließbare Entspannungsleitung verbunden ist, wobei die erforderlichen Umschaltefunktionen für die Desorption des Sauerstoffs in vorteilhafter Weise dadurch erzielt werden, daß an das $O_2$-zurückhaltende Molekularsieb ein Gebläse anschließbar ist, und daß nach dem Gebläse ein erstes Wegeventil angeordnet ist, welches in einer Stellung den Gasstrom über den Wärmetauscher zurück in das Molekularsieb leitet und in einer weiteren Stellung das Gebläse mit dem Sauerstoffaustrag verbindet. Zur Erwärmung des sauerstoffzurückhaltenden Molekularsiebes wird somit kein zusätzliches Medium, sondern ein unmittelbar in der Anlage strömendes Medium herangezogen, welches bis zur Erzielung der gewünschten Temperatur für die Desorption von Sauerstoff im Kreislauf geführt werden kann und nach dem Druckausgleich drucklos oder unter Unterdruck abgesaugt werden kann, wobei das abgesaugte Medium nach dem Druckausgleich im wesentlichen reinen Sauerstoff enthält. Um in der Folge rasch wiederum auf den Sauerstoffadsorptionsvorgang umzustellen, kann die Einrichtung so weitergebildet sein, daß in den Kreislauf für die Erwärmung des Molekularsiebes zur Desorption von $O_2$ ein weiteres Wegeventil angeordnet ist, welches in einer Stellung den Kreislauf über dem mit heißen Verbrennungsabgasen beaufschlagten Wärmetauscher und in einer weiteren Stellung über einen Kühler schließt, wobei der wahlweise zuschaltbare Kühler zum Kaltfahren des Molekularsiebes verwendet wird, worauf neuerlich komprimierte Luft bei vergleichsweise niederen Temperaturen durch das Molekularsieb hindurchgeleitet werden kann. Die Kühlung für das Kaltfahren des Molekularsiebes kann in einfacher Weise dadurch gewährleistet werden, daß der Kühler im bypass zur das Molekularsieb mit der Entspannungsturbine verbindenden Leitung angeordnet ist. Für das Ausbringen des Sauerstoffes nach Erzielung der erforderlichen Temperatur des Molekularsiebes ist nach dem Gebläse ein Wegeventil vorgesehen, welches bis zur Erzielung der erforderlichen Temperatur den Gasstrom im Kreislauf führt und für das Ausbringen von Sauerstoff in eine Stellung gebracht wird, bei welcher das Gebläse mit dem Sauerstoffaustrag verbunden ist. In dieser Stellung kann nach dem ersten Wegeventil ein Verdichter angeschlossen sein, um auf diese Weise komprimierten Sauerstoff zu gewinnen und zu speichern.

Mit der erfindungsgemäßen Anlage kann kalter Druckstickstoff, warmer druckloser Stickstoff zum Regenerieren der Molekularsiebe und Sauerstoff gewonnen werden. Die Erhitzung des das Molekularsieb verlassenden Druckstickstoffes vor dem Einleiten in die Entspannungsturbine führt zur Erhöhung der Leistungsausbeute und kann bis auf Temperaturen nahe 1000°C vorgenommen werden, da moderne Gasturbinenbeschaufelungen bei einem so reinen Fluid, wie trockenem Stickstoff, dessen Wasseranteil zuvor in einem vorgeschaltetem Molekularsieb entfernt wurde, geringe Korrosionserscheinungen zur Folge haben. Die Verwendung eines sauerstoffzurückhaltenden Siebes und einer mit relativ reinem und trockenem Stickstoff heiß beaufschlagten Gasturbine ermöglicht somit die Leistungsausbeute wesentlich zu verbessern, wo aber die Grenze für die Erhitzung des Stickstoffes weniger durch die Gasturbinenbeschaufelung als durch die Dauerfestigkeit an den mit Rauchgasen beaufschlagten Rohren des Wärmetauschers gegeben ist. Bei einer Befeuerung mit Gichtgas können Temperaturen von knapp über 800°C bereits die Dauerfestigkeit der verfügbaren Rohrmaterialien erschöpfen.

Die Rückgewinnung der Abwärme aus dem entspannten Stickstoff, welcher die Gasentspannungsturbine verläßt, kann mittels eines herkömmlichen Wärmetauschers auf den kalten Druckstickstoff übertragen werden, so daß die Beheizung, welche beispielsweise mit Gichtgasen erfolgt, lediglich die Temperaturdifferenz dieses Wärmetauschers und den Temperaturabbau des Gases im Zuge der Turbinenentspannung aufbringen muß. Die Ausnutzung der zusätzlich aufzubringenden Wärme wird praktisch mit dem Turbinenwirkungsgrad in mechanische Leistung umgesetzt und der einzige größere Zusatzverlust, der durch die zusätzliche Beheizung des heißen Druckgases entsteht, besteht im Abgasverlust dieser Beheizung.

Sauerstoffverbraucher, wie beispielsweise Vergasungsreaktoren, LD-Stahlwerke oder partielle Oxidationsanlagen weisen zumeist Brenngase als Kuppelprodukte auf. Die für den Betrieb der Anlage erforderlichen Brenngase können somit unmittelbar den Sauerstoffverbrauchern, welchen der mit der Anlage hergestellte Sauerstoff zugeführt wird oder damit im Verbund betriebenen Anlagen, entnommen werden. Insbesondere im Hochofen fällt ein erheblicher Überschuß an heizwertschwachem Gichtgas an, welches hier ohne nennenswerte Schwierigkeiten verwendet werden kann. Bei einer Leckage von Wärmetauschern kommt es lediglich zur Sauerstoffanreicherung im abziehenden Rauchgas bzw. im Stickstoff, wodurch keine zusätzlichen Gefahren gegeben werden.

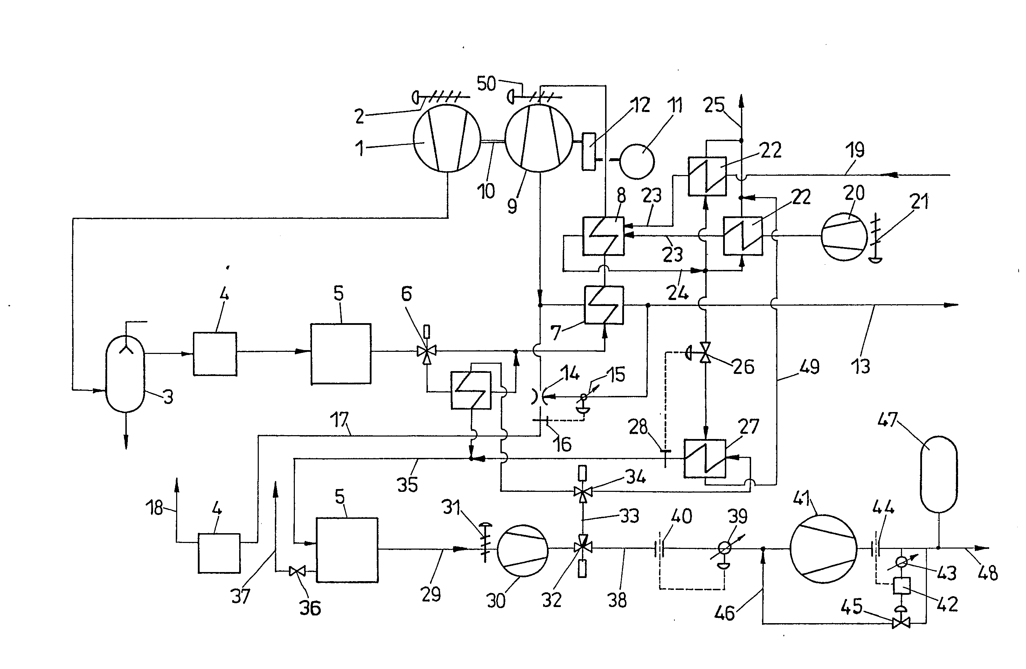

Die Erfindung wird nachfolgend an Hand eines in der Zeichnung schematisch dargestellten Ausführungsbeispieles näher erläutert.

Gefilterte Luft wird einem Kompressor 1 zugeführt, welcher zur Regelung ein Mengenregelorgan 2, beispielsweise einen Drallregler, aufweist. Die komprimierte Luft, welche sich auf Grund der Kompression auf erhöhter Temperatur befindet, wird mittels eines Luftwäschers 3 gekühlt und gelangt in der Folge zunächst in ein erstes Molekularsieb 4, in welchem Wasser, $CO_2$ und Kohlenwasserstoffe zurückgehalten werden. Anschließend ist ein sauerstoffzurückhaltendes Molekularsieb 5 vorgesehen. Der von Sauerstoff weitgehend befreite Gasanteil gelangt über ein Wegeventil 6 zu einem ersten Wärmetauscher 7 und anschließend in einen weiteren mit Brenngasen beaufschlagten Wärmetauscher 8. Der auf diese Weise erhitzte trockene Druckstickstoff wird einer Entspannungsturbine 9 zugeführt, welche über eine Welle 10 mit dem Kompressor 1 gekuppelt ist. Der Antriebsmotor des Kompressors ist mit 11 bezeichnet und weist ein Getriebe 12 auf. Die volle Antriebsleistung des Antriebsmotors 11 ist lediglich zum Anfahren der Anlage erforderlich. Im Betrieb übernimmt der Antriebsmotor 11 die Differenzleistung zwischen Kompressor 1 und Gasturbine 9 und ist so dimensioniert, daß der Maschinensatz mit begrenzter Förderleistung hochgefahren werden kann. Sobald ein nennenswerter Gasanteil über die Entspannungsturbine 9 entspannt wird, wird ein großer Teil der Antriebsleistung über die Kupplungswelle 10 von der Entspannungsturbine 9 geleistet.

Das durch die Entspannung wiederum abgekühlte, aber immer noch auf höherem Temperaturniveau befindliche Gas gelangt in der Folge über den Wärmetauscher 7, in welchem das kalte Druckgas vor der Erhitzung im Wärmetauscher 8 vorgewärmt wird, in eine Leitung 13, welcher druckloser Stickstoff entnommen werden kann. Eine Teilmenge dieses noch relativ warmen, weitgehend entspannten Gases kann über eine Mischdüse 14 geführt werden, wobei ein Regelorgan 15 für anzusaugenden drucklosen Stickstoff von einem Temperaturmeßorgan 16 angesteuert ist, um Regeneriergas mit der gewünschten Temperatur für die Regeneration des ersten Molsiebes 4, in welchem Wasserdampf, $CO_2$ und Kohlenwasserstoffe zurückgehalten wurden, zur Verfügung zu stellen. Die Regenerationsgasleitung ist hiebei mit 17 bezeichnet und führt nach dem Passieren des ersten Molekularsiebes 4 in einen Abblasekamin 18 für feuchtes Regenerierabgas aus der Molsiebregenerierung.

Für die Erhitzung des Druckmediums vor dem Eintritt in die Entspannungsturbine 9 im Wärmetauscher 8 werden Brenngase über eine Leitung 19 zugeführt, wobei diese Brenngase ebenso wie die von einem Gebläse 20 mit entsprechendem Mengenregelorgan 21, beispielsweise einem Drallregler, zugeführte Brennluft über Wärmetauscher 22 erwärmt wird. Die vorgewärmten Verbrennungsgase und die vorgewärmte Brennluft werden in der Folge über die Leitungen 23 der Brennkammer im Wärmetauscher 8 zugeführt, wobei die heißen Verbrennungsabgase über eine Leitung 24 abgezogen werden und im gezeigten Fall den Wärmetauscher 22 für die Vorwärmung der Verbrennungsluft beaufschlagen. Das Abgas wird über einen Kamin 25 abgeleitet.

Für die Regeneration des sauerstoffzurückhaltenden Molekularsiebes 5 wird ein Teil dieser Verbrennungsabgase aus der Leitung 24 vor dem Passieren des Wärmetauschers 22 über ein temperaturgeregeltes Absperr- bzw. Regelorgan 26 einem Wärmetauscher 27 zugeführt. Der Temperaturmeßfühler für das Regelorgan 26 ist mit 28 bezeichnet und befindet sich in einer Kreislaufleitung für die Erwärmung des Molsiebes 5. Zu dem Zweck ist an das Molsieb 5 eine Leitung 29 und ein Gebläse 30 mit zugehörigem Mengenregelorgan, beispielsweise Drallregler 31, angeordnet und ein erstes Mehrwegeventil vorgesehen, mit welchem der aus dem Molekularsieb 5 über das Gebläse 30 entnommene Gasanteil über eine Leitung 33 und ein zweites Mehrwegeventil 34 dem Wärmetauscher 27 zugeführt werden kann. Das erwärmte Medium, welches den Wärmetauscher 27 verläßt, kann über die Leitung 35 im Kreislauf dem Molekularsieb 5 rückgeführt werden, wobei in dieser Phase der Aufwärmung des Molsiebes 5 noch unter Druck oder bereits drucklos gearbeitet werden kann. Ein Entspannungsventil 36 für das Drucklosmachen des Molekularsiebes 5 ist hiezu mit einem Abblasekamin 37 verbunden.

Nach Erzielung der gewünschten Temperatur des Molsiebes 5 kann das erste Wegeventil 32 umgeschaltet werden, wobei nach Entspannung des Molekularsiebes 5 reiner Sauerstoff über die Leitung 38 abgezogen werden kann. In diese Leitung 38 ist ein Mengenstellorgan 39 für Sauerstoff eingeschaltet, welches als Saugdrosselklappe ausgebildet ist, wobei die Mengenmeßstrecke mit 40 bezeichnet ist.

In der Folge ist ein Sauerstoffverdichter 41 vorgesehen, welcher mit den üblichen Sicherungssteuerungen und im besonderen mit einem Pumpgrenzverhütungsregler 42, angesteuert von einem Enddruckmeßgerät 43 und einer Fördermeßstrecke 44, vorgesehen ist. Die Regler wirken auf ein Sauerstoffumblaseventil 45, welches im geöffneten Zustand einen Teil des komprimierten Sauerstoffs über die Leitung 46 der Saugseite des Verdichters 41 rückführt. Der auf diese Weise verdichtete Sauerstoff kann in einem Speicher 47 gespeichert werden oder unmittelbar als Drucksauerstoff über die Leitung 48 abgezogen werden.

Bei Verwendung von Gichtgasen in der Brennstoffzuführungsleitung 19 lassen sich im Wärmetauscher 8 Temperaturen bis etwa 850°C ohne nennenswerte Heißgaskorrosion erzielen.

Mit dieser Schaltungsanordnung werden die Rauchgase des Wärmetauschers 8 für die Erwärmung des Molekurlarsiebes 5 zum Zwecke der Desorption von Sauerstoff nochmals ausgenutzt, wobei diese Rauchgase nach dem Verlassen des Wärmetauschers 27 über eine Leitung 49 in den Abgaskamin 25 rückgeführt werden.

Auch die Entspannungsturbine 9 kann mit einem entsprechenden Mengenregelorgan, beispielsweise einem Drallregler 50, ausgestattet sein.

**Patentansprüche**

1. Verfahren zum Trennen von Gasgemischen, insbesondere zur Zerlegung von Luft, bei welchem das Gasgemisch komprimiert und über ein $O_2$-zurückhaltendes Molekularsieb (5) geleitet wird, und bei welchem der das Molekularsieb (5) verlassende Gasanteil, insbesondere der Stickstoff, über eine mit dem Gaskompressor (1) kraftschlüssig kuppelbare Entspannungsturbine (9) geleitet wird, dadurch gekennzeichnet, daß der das Molekularsieb (5) verlassende Gasanteil vor dem Einleiten in die Entspannungsturbine (12) auf Temperaturen über 200°C, vorzugsweise 500° bis 850°C, erhitzt wird, wobei wenigstens ein Wärmetauscher für die Erhitzung des der Entspannungsturbine zuzuführenden Gasanteiles mit heißen Brenngasen beheizt wird.

2. Verfahren nach Anspruch 1, dadurch gekennzeichnet, daß zur Desorption des Sauerstoffes das Molekularsieb (5) auf Temperaturen von wenigstens 150°C, vorzugsweise wenigstens 200°C, erwärmt wird und nach Entspannen gegen atmosphärischen Druck drucklos oder unter unteratmosphärischem Druck abgesaugt wird.

3. Verfahren nach Anspruch 1 oder 2, dadurch gekennzeichnet, daß vor dem $O_2$-zurückhaltenden Molekularsieb (5) ein weiteres, insbesondere $H_2O$- und $CO_2$-zurückhaltendes Molekularsieb (4) vom komprimierten Gas durchströmt wird, welches durch eine Teilmenge des die Entspannungsturbine (9) verlassenden Gasanteiles, insbesondere des $N_2$, regenerierbar ist.

4. Verfahren nach Anspruch 1, 2 oder 3, dadurch gekennzeichnet, daß die Erhitzung des der Entspannungsturbine (9) zuzuführenden Gasanteiles durch Verbrennung von Brennstoffen vorgenommen wird und daß die heißen Verbrennungsabgase über wenigstens einen weiteren Wärmetauscher (27) für die Erwärmung eines das Molekularsieb (5) zur Desorption des Sauerstoffes erwärmenden Mediums geleitet werden.

5. Vorrichtung zur Durchführung des Verfahrens nach einem der Ansprüche 1 bis 4, dadurch gekennzeichnet, daß mit einem Gaskompressor (1) eine Entspannungsturbine (9) gekoppelt ist.

6. Vorrichtung nach Anspruch 5, dadurch gekennzeichnet, daß die das $O_2$-zurückhaltende Molekularsieb (5) mit der Entspannungsturbine (9) verbindende Leitung über wenigstens einen mit Brennern beaufschlagten Wärmetauscher (8) geführt ist, wobei vorzugsweise ein weiterer Wärmetauscher (7) vorgeschaltet ist, über welchen die die Entspannungsturbine (9) verlassenden Gase geleitet sind.

7. Vorrichtung nach Anspruch 5 oder 6, dadurch gekennzeichnet, daß zur Desorption des Sauerstoffes aus dem $O_2$-zurückhaltenden Molekularsieb (5) das Gas wenigstens teilweise im Kreislauf über einen Wärmetauscher (27) geführt ist, welcher mit den Verbrennungsabgasen aus dem mit Brennern beaufschlagten Wärmetauscher (8) gespeist ist, und daß mit dem Molekularsieb (5) eine abschließbare Entspannungsleitung (37) verbunden ist.

8. Vorrichtung nach einem der Ansprüche 5, 6 oder 7, dadurch gekennzeichnet, daß an das $O_2$-zurückhaltende Molekularsieb (5) ein Gebläse (30) anschließbar ist, und daß nach dem Gebläse (30) ein erstes Wegeventil (32) angeordnet ist, welches in einer Stellung den Gasstrom über den Wärmetauscher (27) zurück in das Molekularsieb (5) leitet und in einer weiteren Stellung das Gebläse (30) mit dem Sauerstoffaustrag (48) verbindet.

9. Vorrichtung nach einem der Ansprüche 5 bis 8, dadurch gekennzeichnet, daß in den Kreislauf für die Erwärmung des Molekularsiebes (5) zur Desorption von $O_2$ ein weiteres Wegeventil (34) angeordnet ist, welches in einer Stellung den Kreislauf über dem mit heißen Verbrennungsabgasen beaufschlagten Wärmetauscher (8) und in einer weiteren Stellung über einen Kühler schließt.

10. Vorrichtung nach Anspruch 9, dadurch gekennzeichnet, daß der Kühler im bypass zur das Molekularsieb (5) mit der Entspannungsturbine (9) verbindenden Leitung angeordnet ist.

11. Vorrichtung nach einem der Ansprüche 5 bis 10, dadurch gekennzeichnet, daß an das Gebläse (30) und das erste Wegeventil (32) ein Verdichter (41) angeschlossen ist.

022586 4

<table>
<tr><td colspan="4" align="center">

## EINSCHLÄGIGE DOKUMENTE

</td></tr>
</table>

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 150 624 (MITSUBISHI JUKOGYO) <br> * Figur 9; Seite 41, Zeile 28 - Seite 42, Zeile 11 * <br> --- | 1 | B 01 D 53/04 |
| A | DE-A-3 307 087 (BERGWERKSVERBAND) <br> ----- | | |

**RECHERCHIERTE SACHGEBIETE (Int. Cl.4)**

B 01 D 53/00

Der vorliegende Recherchenbericht wurde für alle Patentansprüche erstellt.

| Recherchenort | Abschlußdatum der Recherche | Prüfer |
|---|---|---|
| DEN HAAG | 25-02-1987 | BOGAERTS M.L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82